# EUROPÄISCHE PATENTSCHRIFT

(11) **EP 0 475 341 B1**
(45) Veröffentlichungstag und Bekanntmachung des Hinweises auf die Patenterteilung: **07.12.1994**
(21) Anmeldenummer: 91115253.6
(22) Anmeldetag: 10.09.1991
(51) Int. Cl.: B60D 5/00, B62D 47/02

(54) **Drehgelenk für einen Niederflur-Omnibus mit elastischer Aufhängung**
Articulated connection for a low floor omnibus with elastic suspension
Articulation pour un autobus surbaissé avec suspension élastique

(30) Priorität: 10.09.1990 DE 4028729
(43) Veröffentlichungstag der Anmeldung: 18.03.1992
(73) Patentinhaber: HYMER LEICHTMETALLBAU GmbH & Co. KG, D-88228 Wangen (DE)
(72) Erfinder: Krause,Fritz, W-7988 Wangen/Allgäu (DE); Lang,Fritz, W-7988 Wangen/Allgäu (DE)
(74) Vertreter: Riebling, Peter, Dr.-Ing.

(56) Entgegenhaltungen:
- DE-A- 3 208 615
- DE-A- 3 904 756
- US-A- 2 843 417

## Beschreibung

Gegenstand der vorliegenden Erfindung ist ein Drehgelenk für einen Niederflur-Omnibus nach dem Oberbegriff des Patentanspruchs 1.

Bei derartigen Drehgelenken besteht der Nachteil, daß der Anschluß des Vorderwagens und der Anschluß des Hinterwagens an das Drehgelenk starr war. Derartige Anschlüße wurden in der Regel geschweißt oder durch eine Schraubverbindung starr befestigt. Die Nickachse wurde zwar mit Hilfe von Bauteilen z. B. Molekular-Gelenken etwas elastisch gehalten, jedoch nur in einem sehr geringen Maße. Kräfte wurden in die Rahmenkonstruktion über diese starren Verbindungen auf das Drehgelenk übertragen. Ebenso umgekehrt erfolgte damit auch eine Krafteinleitung von dem Drehgelenk in die Rahmenteile des Vorder- und Hinterwagens. Damit bestand der Nachteil, daß eine Rißbildung und Rahmenbrüche vorkommen konnten.

Aus der US-A-2,843,417 ist eine verbesserte Ausführung eines Drehgelenkes bekannt, wobei sich das Drehgelenk mittig zwischen dem Vorder- und Hinterwagen angeordnet befindet, und die Rahmen des Vorder- und Hinterwagens elastisch durch Gummipuffer an dem mittleren Drehgelenk befestigt sind. Dieses Drehgelenk weist eine vertikale Knickachse und eine quer zur Längsachse des Fahrzeugs liegende Nickachse auf, wobei die Nickachse den Drehkranz trägt.

Die hier beschriebenen Merkmale bilden den Oberbegriff des unabhängigen Anspruches 1.

Nachteilig bei dieser Ausführung ist, daß die Nickachse und der Drehkranz vertikal übereinander liegen, was in einer großen Aufbauhöhe dieses Systems resultiert. Weiterhin vergrößert sich die Aufbauhöhe durch am Vorder- und Hinterwagen angeflanschte starre Befestigungsarme für das Drehgelenk, so daß auch die Bodenfreiheit eingeschränkt wird. Die Befestigungsarme unterliegen einer Torsionsbewegung, da sie starr am Fahrzeugrahmen angebracht sind, so daß sie hohen Belastungen standhalten müssen und deshalb stark ausgebildet sein müssen.

Der vorliegenden Erfindung liegt deshalb die Aufgabe zugrunde, ein Drehgelenk der eingangs genannten Art so auszubilden, daß bei geringerer Dimensionierung des Drehgelenkes gegenüber bekannten Drehgelenken dennoch die während des Betriebes auftretenden Kräfte ohne Gefahr der Beschädigung des Rahmens oder der Befestigungen am Drehkranz aufgenommen werden können. Weiterhin soll eine geringe Aufbauhöhe und eine damit erreichbare größere Bodenfreiheit erzielt werden.

Diese Aufgabe wird erfindungsgemäß durch die im kennzeichnenden Teil des Patentanspruches 1 genannten Merkmale gelöst.

Mit der gegebenen technischen Lehre wird also der wesentliche Vorteil erreicht, daß die Verbindung zwischen der Baugruppe des Drehkranzes und der Rahmengruppe des Vorder- und Hinterwagens nun nicht mehr starr ausgebildet ist, sondern elastisch als Dreipunkt-Aufhängung, die in der Lage ist, Zug-, Druck-, Biege- und Torsionskräfte einwandfrei aufzunehmen.

Damit wird von vornherein vermieden, daß derartige Kräfte, insbesondere deren Lastspitzen, als Bruchlast auf die vorher starr ausgebildeten Verbindungen wirkt.

Als besonders bevorzugte Ausführungsform für die Ausbildung der Dreipunkt-Aufhängung werden hierbei elastische Aufhängelager verwendet. In gleicher Weise können elastische Kugelgelenkverbindungen verwendet werden oder Schwingblöcke. Hierbei kann z. B. das vorher erwähnte Aufhängelager runden Querschnitt aufweisen, während der Schwingblock quadratischen Querschnitt aufweist.

In einer bevorzugten Ausführungsform der vorliegenden Erfindung besteht die Dreipunkt-Aufhängung aus zwei in horizontaler Ebene gegenüberliegenden elastischen Aufhängelagern, wobei ein drittes Aufhängelager in Richtung der Längsachse jeweils nach hinten bzw. nach vorne weit auseinander versetzt von den beiden vorher erwähnten Schwingblöcken angeordnet ist. Es ergibt sich hiermit eine außerordentlich günstige Hebelübersetzung für die Kraftübertragung.

Ein erster Hebelarm wird hierbei gebildet von der Nickachse bis zu der Einspannstelle (Lagerstelle) der in horizontaler Ebene einander gegenüberliegenden Schwingblöcke, während der andere Hebelarm gebildet wird von der Einspannstelle der Schwingblöcke in horizontaler Ebene bis zu der Einspannstelle des Schwingblockes, der nach hinten in Richtung zur Längsachse des Fahrzeugs versetzt ist.

Der Arm zwischen der Nickachse der Einspannstelle der in horizontaler Ebene liegenden Schwingblöcke ist somit sehr kurz, während der Arm von den horizontal liegenden Schwingblöcken bis zu dem hinteren, in Richtung der Längsachse versetzten Schwingblock lang ist. Dadurch ergibt sich eine lange Einspannstelle für den Rahmen, damit sind die Reaktions- bzw. Auflagerkräfte relativ gering.

Ein weiterer wesentlicher Vorteil der Erfindung ist, daß - wie an sich bekannt - die Torsionskräfte auf die Nickachse durch weitere Schwingblöcke aufgefangen wird. Wichtig ist nun, daß die Funktion der bereits schon vorhandenen Schwingblöcke (die zum Stand der Technik gehören) nun ergänzt und verbessert wird durch die erfindungsgemäß hinzukommenden Schwingblöcke, welche die Lagerung der gesamten Baugruppe des Drehkranzes an dem Vorder- und Hinterwagen übernehmen.

Eventuell über den Vorder- oder Hinterwagen auf die Baugruppe des Drehkranzes eingeleitete Torsionskräfte werden also zunächst von den erfindungsgemäßen Schwingblöcken aufgenommen, um sodann noch als eventuell noch vorhandene Restkraft von den weiterhin noch vorhandenen bekannten Schwingblöcken aufgenommen zu werden. Auf diese Weise wird die bauseits vorhandene und zum Stand der Technik gehörende Schwingblock-Gruppe, die derartige Torsionskräfte aufnehmen soll, nur noch niedrig beansprucht.

Unter dem Rahmen der vorliegenden Erfindung fallen auch die kinematischen Umkehrungen, nämlich daß der hier beschriebene Bus als Schubgelenk- oder als Zuggelenk-Bus ausgebildet ist.

Hierbei ist wichtig, daß die Schwingblöcke, die einander in horizontaler Ebene gegenüberliegen, in der Lage sind, auch axiale Kräfte (in Richtung ihrer Achse liegende) aufzunehmen, damit eben ein Schub- und ein Zugbetrieb auch im geknickten Zustand des Gelenkbusses möglich ist. Damit können gleichzeitig auch derartige Schub- und Zugkräfte vom Vorderwagen auf den Hinterwagen in ausgezeichneter Weise gedämpft werden. Hierbei wird es bevorzugt, wenn die Schwingblöcke als Bundbuchsen ausgebildet sind, um derartige axiale Kräfte elastisch aufzunehmen.

Die Erfindung wird nun anhand von mehreren Zeichnungen näher beschrieben. Hierbei ergeben sich aus den Zeichnungen und ihrer Beschreibung weitere Vorteile und Merkmale der Erfindung.

Es zeigen:
- Figur 1:: schematisiert in Seitenansicht einen Niederflur-Drehgelenk-Omnibus nach der Erfindung mit Darstellung der wesentlichsten Baugruppen;
- Figur 2:: die Draufsicht auf die Baugruppe des Drehgelenkes bei abgenommener Abdeckplatte;

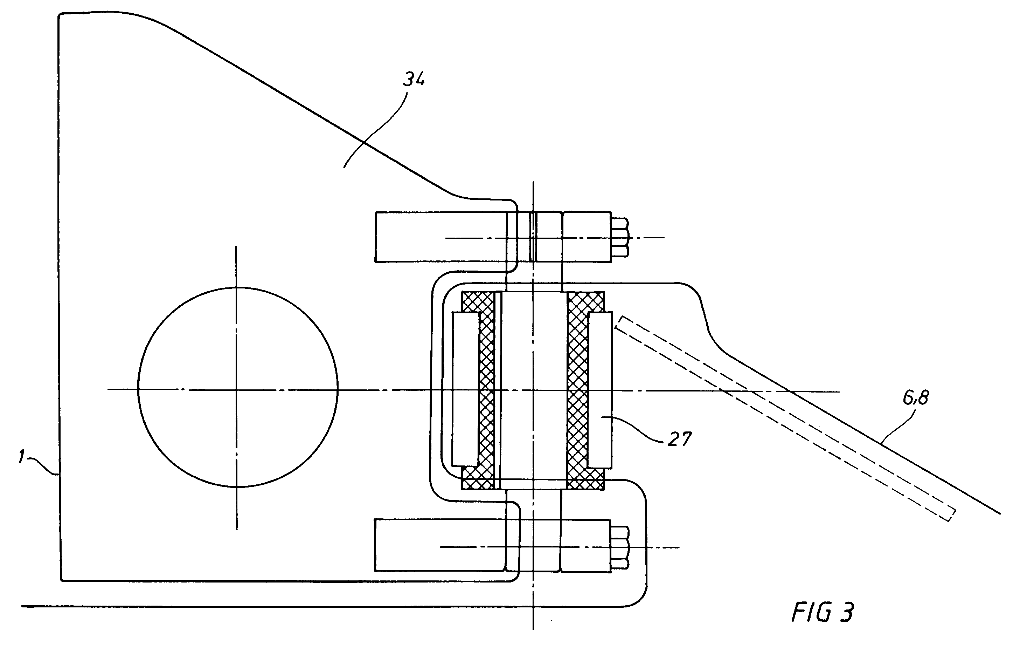

- Figur 3:: schematisiert einen Schnitt durch einen Schwingblock nach der Erfindung als Detail der Verbindung zwischen einem Vorderwagen und der Baugruppe des Drehkranzes.

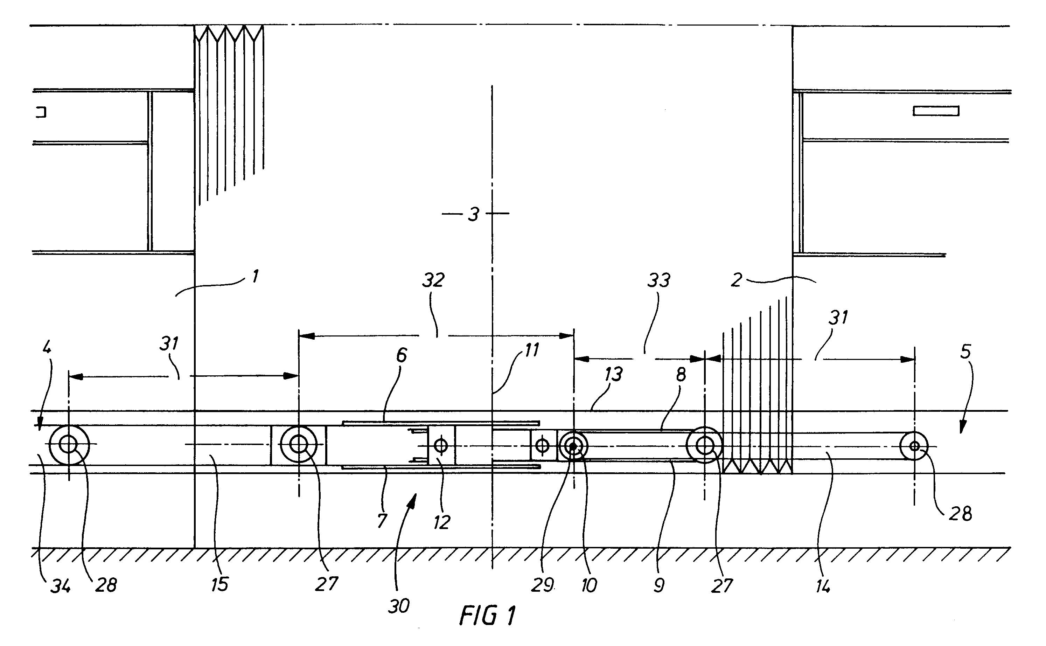

Gemäß Figur 1 besteht der Vorderwagen 1 aus einem bodenseitigen Rahmen mit einer Befestigungsplatte 34.

Der jeweilige Rahmen 4,5 weist also im wesentlichen eine Befestigungsplatte 34 auf. Die gleichen Verhältnisse gelten für den Hinterwagen 2. Vorder- und Hinterwagen 1,2 sind über einen Faltenbalg 3 miteinander verbunden.

Die eigentliche Drehverbindung erfolgt über das Drehgelenk 30, welches nun erfindungsgemäß über Schwingblöcke 27,28 jeweils die elastische Verbindung zu dem Rahmen 4,5 des Vorder- und Hinterwagens 1,2 herstellt.

Wichtig ist nun, daß ein relativ kurzer Hebelarm 33 zwischen der Nickachse 10 und dem ersten Schwinblockpaar 27 gebildet wird, während ein längerer Hebelarm 31 zwischen dem in horizontaler Ebene liegenden Schwingblockpaar 27 und dem hinteren, in Längsachse des Fahrzeuges nach hinten versetzten Schwingblock 28 besteht.

Aufgrund dieses Hebelverhältnisses erfolgt eine günstige Kraftübertragung von den Rahmen 4,5 des Vorder- und Hinterwagens auf den jeweiligen Rahmen 14,15 des Drehgelenkes 30. Weil diese Verbindung erfindungsgemäß elastisch ausgebildet ist und durch jeweils drei Schwingblöcke 27,28 gebildet wird, werden auch damit eventuell übertragene Zug-, Druck- und Torsionskräfte auf die Struktur des Vorder- und Hinterwagens nicht übertragen, sondern von den Schwingblöcken 27,28 aufgenommen.

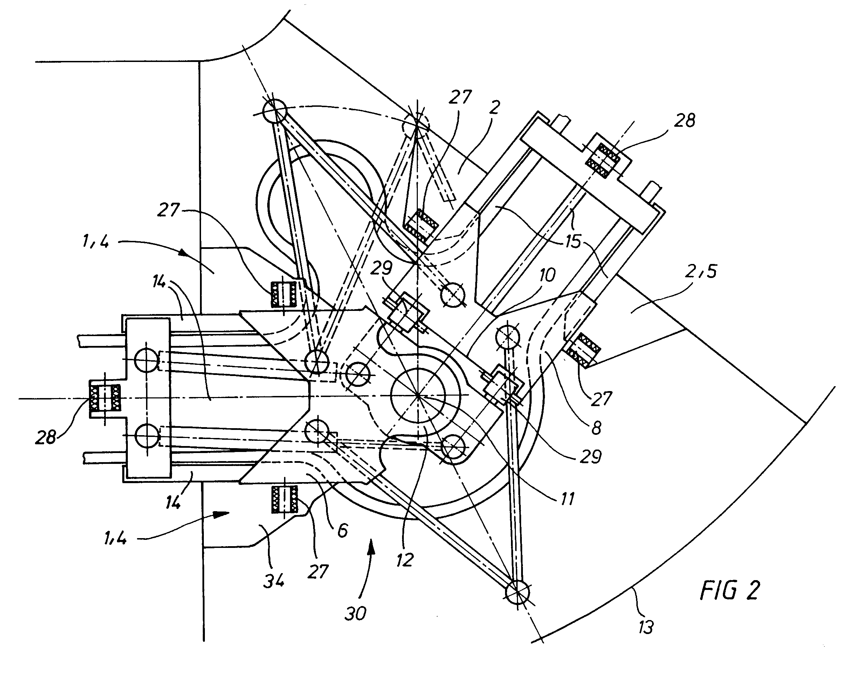

Weitere Einzelheiten ergeben sich aus der Beschreibung der Figur 2.

Hierbei ist erkennbar, daß der Rahmen 4 des Vorderwagens über seitliche Platten an dem in horizontaler Ebene liegenden Schwingblockpaar 27 ansetzt.

Der Rahmen 14 des Drehgelenkes 30 wird hierbei durch drei parallele einen gegenseitigen Abstand voneinander einnehmende Rohre gebildet, die über die Platte 6 miteinander verbunden sind. Ebenso ist die untere Platten 7 zur Verbindung der Unterseiten dieser Rahmenteile 14 vorgesehen.
In analoger Weise wird der hintere Rahmen 15 des Drehgelenkes durch wiederum drei Rohre gebildet, die durch obere und untere Platten 8,9 miteinander verbunden sind.

Es liegt eine Dreipunkt-Aufhängung mit den Schwingblöcken 27,28 vor, wobei z. B. der Rahmen 4 des Vorderwagens mit der erwähnten Befestigungsplatte 34 an der einen Seite des Schwingblockes 27 jeweils angreift, während ein mittlerer Schwingblock 28 nach hinten versetzt von dem einander gegenüberliegenden Schwingblockpaar 27 jeweils angeordnet ist.

Die Verbindung des Rahmens 4,5 an den hinteren Schwingblock 28 ist nicht näher dargestellt.

Das Drehgelenk bildet mit seinen vorderen Schwingblöcken 27 einen Hebelarm 32 zu der Nickachse 10, wobei in der Nickachse 10 (vergleiche Figur 2) noch ein Paar in horizontaler Ebene liegender Schwingblöcke 29 angeordnet sind, welche Schwingblöcke (oder Molekulargelenke) die Nickachse selbst bilden und über die Längsachse des Rahmens 15 des Drehgelenkes 30 die Relativbewegung zwischen dem Vorderwagen und Hinterwagen 1,2 aufnehmen sollen.

Wie bereits eingangs schon erwähnt, nehmen diese Kräfte auch die erfindungsgemäß vorgesehenen Schwingblöcke 27,28 auf, so daß die noch vorhandenen Schwingblöcke 29 nur wenig beansprucht werden.

Insgesamt wird also der Vorteil einer elastischen Verbindung des Drehgelenkes 30 zum Rahmen 4,5 des Vorder- und Hinterwagens 1,2 erreicht und eventuell entstehende Bruchlasten, die vorher zu einem Bruch der Rahmenbefestigung führten, werden nun über diese Schwingblöcke 27,28,29 aufgefangen.

| ZEICHNUNGS-LEGENDE | | | |
|---|---|---|---|
| 1 | Vorderwagen | 27 | Schwingblock (vordere) |
| 2 | Hinterwagen | 28 | Schwingblock (hintere) |
| 3 | Faltenbalg | 29 | Schwingblock |
| 4 | Rahmen | 30 | Drehgelenk |
| 5 | Rahmen | 31 | Hebelarm |
| 6 | Platte (obere) | 32 | Hebelarm |
| 7 | Platte | 33 | Hebelarm |
| 8 | Platte | 34 | Befestigungsplatte |
| 9 | Platte | | |
| 10 | Nickachse | | |
| 11 | Knickachse | | |
| 12 | Drehkranz | | |
| 13 | Abdeckplatte | | |
| 14 | Rahmen (Drehgelenk 30) | | |
| 15 | Rahmen (Drehgelenk 30) | | |

## Patentansprüche

1. Niederflur-Drehgelenk-Omnibus der zwischen dem Vorderwagen (1) und dem Hinterwagen (2) eine Verbindungsvorrichtung aufweist, die ein mittleres Drehgelenk (30) mit vertikaler Knickachse (11) sowie eine horizontale, bei ausgerichtetem Fahrzeug quer zur Längsachse des Fahrzeuges liegende Nickachse (10) umfaßt, wobei die Rahmen (4,5) des Vorder- und Hinterwagens (1,2) elastisch an der Verbindungsvorrichtung befestigt sind, **dadurch gekennzeichnet**, daß bei ausgerichtetem Fahrzeug die Nickachse (10) bezüglich der Knickachse (11) des Drehgelenkes (30) entlang der Längsachse des Fahrzeuges versetzt ist, eine erste bezüglich der Nickachse (10) gegenüber der Knickachse (11) liegende elastische Verbindung zwischen einem der Fahrzeugteile und der Verbindungsvorrichtung vorhanden ist, eine zweite bezüglich der Knickachse (11) gegenüber der ersten elastischen Verbindung liegende elastische Verbindung, zwischen dem anderen Fahrzeugteil und der Verbindungsvorrichtung vorhanden ist.

2. Niederflur-Drehgelenk-Omnibus nach Anspruch 1,
**dadurch gekennzeichnet**, daß die elastische Verbindung zwischen dem jeweiligen Rahmen (4,5) von Vorder- und Hinterwagen (1,2) am Drehgelenk (30) durch eine elastische Dreipunkt-Aufhängung gegeben ist.

3. Niederflur-Drehgelenk-Omnibus nach einem der Ansprüche 1 oder 2,
**dadurch gekenzeichnet**, daß die elastische Dreipunkt-Aufhängung durch zwei einen gegenseitigen Abstand voneinander einnehmenden, einander in horizontaler Ebene gegenüberliegenden Schwingblöcken (27) gebildet ist, wobei ein dritter Schwingblock in Richtung der Längsachse des jeweiligen Rahmens (14,15) des Drehgelenks (30) nach hinten versetzt angeordnet ist.

4. Niederflur-Drehgelenk-Omnibus nach Anspruche 3,
**dadurch gekennzeichnet**, daß jeder Schwingblock als Bundbuchse ausgebildet ist, und hierdurch in axialer Richtung auf den Schwingblock wirkende Kräfte aufnimmt.

5. Niederflur-Drehgelenk-Omnibus nach einem der Ansprüche 1 bis 4,
**dadurch gekennzeichnet**, daß sich der in Längsachse ergebene Abstand zwischen dem hinteren Schwingblock (28) und dem vorderen Schwingblockpaar (27) (Hebelarm 31) größer ist als der Abstand zwischen dem vorderen Schwingblockpaar 27 und der Nickachse (10).

## Claims

1. A low floor swivel joint omnibus which has a connecting device between the front car (1) and the rear car (2), which connecting device comprises a central swivel joint (30) with a vertical bend axis (11) and also comprises a horizontal pitch axis (10) lying transversely to the longitudinal axis of the vehicle with the vehicle aligned, in which the frames (4,5) of the front and rear cars (1,2) are secured elastically on the connecting device, characterised in that with the vehicle aligned, the pitch axis (10) is staggered with respect to the bend axis (11) of the swivel joint (30) along the longitudinal axis of the vehicle, a first elastic connection with respect to the pitch axis (10) lying opposite the bend axis (11) is present between one of the vehicle parts and the connecting device, a second elastic connection with respect to the bend axis (11) lying opposite the first elastic connection, is present between the other vehicle part and the connecting device.

2. A low floor swivel joint omnibus according to Claim 1, characterised in that the elastic connection between the respective frame (4,5) of the front and rear cars (1,2) exists on the swivel joint (30) through an elastic three-point suspension.

3. A low floor swivel joint omnibus according to one of Claims 1 or 2, characterised in that the elastic three-point suspension is formed by two swing blocks (27) occupying a reciprocal distance from each other and lying opposite each other in horizontal plane, in which a third swing block is arranged staggered toward the rear in the direction of the longitudinal axis of the respective frame (14,15) of the swivel joint (30).

4. A low floor swivel joint omnibus according to Claim 3, characterised in that each swing block is constructed as a flange bushing, and thereby receives forces acting in axial direction on the swing block.

5. A low floor swivel joint omnibus according to one of Claims 1 to 4, characterised in that the distance occurring in the longitudinal axis between the rear swing block (28) and the front swing block pair (27) (lever arm 31) is greater than the distance between the front swing block pair 27 and the pitch axis (10).

## Revendications

1. Omnibus surbaissé à articulation tournante qui comporte, entre la voiture avant (1) et la voiture arrière (2), un dispositif de liaison formé d'une articulation tournante centrale (30) à axe vertical pivotant (11) et d'un axe horizontal de tangage (10) situé transversalement par rapport à l'axe longitudinal du véhicule lorsque celui-ci est aligné, les châssis (4, 5) des voitures avant et arrière (1, 2) étant fixés de façon élastique au dispositif de liaison, caractérisé en ce que, lorsque le véhicule est aligné, l'axe de tangage (10) est décalé par rapport à l'axe pivotant (11) de l'articulation tournante (30), le long de l'axe longitudinal du véhicule, et il est prévu une première liaison élastique, située à l'opposé de l'axe pivotant (11) par rapport à l'axe de tangage (10), entre un élément du véhicule et le dispositif de liaison, et une seconde liaison élastique, située à l'opposé de la première liaison par rapport à l'axe pivotant (11), entre l'autre élément du véhicule et le dispositif de liaison.

2. Omnibus surbaissé à articulation tournante selon la revendication 1, caractérisé en ce que la liaison élastique entre les châssis (4, 5) des voitures avant et arrière (1, 2) au niveau de l'articulation tournante (30) est définie par une suspension élastique à trois points.

3. Omnibus surbaissé à articulation tournante selon l'une des revendications 1 ou 2, caractérisé en ce que la suspension élastique à trois points est formée par deux blocs oscillants (27) présentant un écartement mutuel et se faisant face dans un plan horizontal, un troisième bloc oscillant étant disposé, décalé vers l'arrière, dans le sens de l'axe longitudinal du châssis (14, 15) de l'articulation tournante (30).

4. Omnibus surbaissé à articulation tournante selon la revendication 3, caractérisé en ce que chaque bloc oscillant est conçu comme une douille à collet et reçoit ainsi les forces agissant dans le sens axial sur le bloc oscillant.

5. Omnibus surbaissé à articulation tournante selon l'une des revendications 1 à 4, caractérisé en ce que l'écartement obtenu suivant l'axe longitudinal entre le bloc oscillant arrière (28) et la paire de blocs oscillants avant (27) (bras de levier 31) est supérieur à l'écartement entre la paire de blocs oscillants avant 27 et l'axe de tangage (10).
